# EUROPEAN PATENT APPLICATION

(11) **EP 4 575 796 A1**
(43) Date of publication of application: **25.06.2025**
(21) Application number: 22955757.4
(22) Date of filing: 19.08.2022
(51) Int. Cl.: G06F 11/20

(54) **CIRCUIT BOARD, CIRCUIT BOARD REPLACEMENT SYSTEM, CIRCUIT BOARD REPLACEMENT METHOD**

(71) Applicant: Carrier Japan Corporation, Tokyo 141-0032 (JP)
(72) Inventor: YAMAMOTO, Kenichi, Fuji-shi, Shizuoka 416-8521 (JP); TERUI, Kazuki, Fuji-shi, Shizuoka 416-8521 (JP); MORIMOTO, Hiroyoshi, Fuji-shi, Shizuoka 416-8521 (JP)
(74) Representative: Gramm, Lins & Partner Patent- und Rechtsanwälte PartGmbB
(86) International application number: PCT/JP2022/031400
(87) International publication number: WO 2024/038585

(57) **Abstract**

In the present embodiment, a circuit board for controlling an apparatus includes: a processing unit configured to be capable of executing various processes; a storage unit configured to be capable of storing various kinds of data; a power supply wire for power supply to the processing unit and the storage unit; a signal wire for signal transmission between the processing unit and the storage unit; a disconnection unit that is capable of disconnecting at least either one of a portion, which performs power supply to the storage unit, in the power supply wire and the signal wire; and a connection unit that is capable of connecting at least either one of a portion of the power supply wire on a side of the storage unit relative to the disconnection unit and a portion of the signal wire on the side of the storage unit relative to the disconnection unit with an outside.

## Description

### Technical Field

Embodiments of the present invention relate to a circuit board for controlling an apparatus installed in apparatuses such as refrigerating cycle devices such as air conditioners, a circuit board replacement system for replacing a circuit board for controlling an apparatus, and a circuit board replacement method for replacing a circuit board for controlling an apparatus, particularly to a control circuit board in which a memory storing various settings is installed.

### Background Art

For example, Patent Literature 1 discloses a method for easily performing transfer of function settings in replacement of a device. In Patent Literature 1, an indoor unit transmits, to a remote controller, setting information about various functions of the indoor unit, which is stored in a non-volatile memory. The remote controller stores the received setting information in a non-volatile memory attached to a circuit board. A worker shuts off a power source supply to the indoor unit and thereby replaces the indoor unit. When a power source is fed to the indoor unit after the replacement, the indoor unit determines whether setting information of the indoor unit itself is registered in the non-volatile memory. In a case where the setting information of the indoor unit itself is not registered in the non-volatile memory, the indoor unit acquires the setting information of the indoor unit, which is stored in the non-volatile memory of the remote controller, and thereby registers the setting information in the non-volatile memory of the indoor unit itself.

Further, Patent Literature 2 discloses an air conditioner which includes an air-conditioning control unit, a data read-write unit, a data control unit, and a manipulation unit. In Patent Literature 2, the air-conditioning control unit controls an air conditioning operation based on operation information and manipulation setting information. The data read-write unit has a storage medium which is detachable, is capable of writing the operation information and the manipulation setting information, which are sent from the air-conditioning control unit, in the storage medium in the air conditioning operation, and is capable of reading the operation information and the manipulation setting information at a time before an operation stop, which are saved in the storage medium, when the air conditioning operation is restarted. The data control unit hands over the operation information and the manipulation setting information, which are sent from the air-conditioning control unit, to the data read-write unit and causes the data read-write unit to write those in the storage medium. Alternatively, the data control unit hands over the operation information and the manipulation setting information at a time before the operation stop, which are read from the storage medium by the data read-write unit, to the air-conditioning control unit. The manipulation unit is capable of inputting the manipulation setting information for manipulating the air conditioning operation.

### Citation List

### Patent Literature

Patent Literature 1: International Publication No. WO 2008/065923
Patent Literature 2: Japanese Patent Laid-Open No. 2013-234763

### Summary of Invention

### Technical Problem

According to Patent Literature 1, data of an indoor unit at a time before replacement of the indoor unit is stored in a remote controller, and in a case where no data are present on an indoor unit side after replacement of the indoor unit, the data can be acquired from the remote controller. However, in order to realize this function, special configurations for realizing such data transfer function have to be provided in the remote controller and the indoor unit, and further, a different configuration has to be provided in each of the remote controller and the indoor unit. In addition, when a circuit board itself of the indoor unit, for example, a CPU on the circuit board, a peripheral circuit of the CPU, or a power source circuit which supplies power to the CPU and so forth is in failure, the data of the indoor unit cannot be transmitted to the remote controller, and transfer of the data cannot be achieved after all.

Patent Literature 2 discloses a proposal of a technique which uses a detachable storage medium, but in this case, the storage medium attached to a circuit board in which a control unit is installed has to be made capable of being detached. Because detachment becomes difficult when the storage medium is soldered, a component such as a socket, to and from which the storage medium can be attached and detached, is necessary on the circuit board, and the number of components thereby increases. Further, because a storage medium such as a common non-volatile memory is basically a very small memory chip with a size of approximately one centimeter square, there is a possibility that the storage medium is damaged in detachment from or attachment to the circuit board.

Accordingly, a circuit board, a circuit board replacement system, and a circuit board replacement method are provided in which a board subject to replacement and a board as a replacement are caused to have the same configuration and transfer of data between old and new boards can safely and quickly be carried out in data transfer between non-volatile memories.

### Solution to Problem

A circuit board according to the present embodiment is a circuit board for controlling an apparatus, the circuit board including: a processing unit configured to be capable of executing various processes; a storage unit configured to be capable of storing various kinds of data; a power supply wire for power supply to the processing unit and the storage unit; a signal wire for signal transmission between the processing unit and the storage unit; a disconnection unit that is capable of disconnecting a portion, which performs power supply to the storage unit, in the power supply wire and disconnecting the signal wire; and a connection unit that is capable of connecting a portion of the power supply wire on a side of the storage unit relative to the disconnection unit and a portion of the signal wire on the side of the storage unit relative to the disconnection unit with an outside.

Alternatively, a circuit board according to the present embodiment is a circuit board for controlling an apparatus, the circuit board including: a processing unit configured to be capable of executing various processes; a storage unit configured to be capable of storing various kinds of data; a power supply wire for power supply to the processing unit and the storage unit; a disconnection unit that is capable of disconnecting a portion, which performs power supply to the storage unit, in the power supply wire; and a connection unit that is capable of connecting a portion of the power supply wire on a side of the storage unit relative to the disconnection unit with an outside.

Alternatively, a circuit board according to the present embodiment is a circuit board for controlling an apparatus, the circuit board including: a processing unit configured to be capable of executing various processes; a storage unit configured to be capable of storing various kinds of data; a signal wire for signal transmission between the processing unit and the storage unit; a disconnection unit that is capable of disconnecting the signal wire; and a connection unit that is capable of connecting a portion of the signal wire on a side of the storage unit relative to the disconnection unit with an outside.

A circuit board replacement system according to the present embodiment is a circuit board replacement system being a system for replacing a circuit board for controlling an apparatus, in which the board includes: a processing unit configured to be capable of executing various processes; a storage unit configured to be capable of storing various kinds of data; a power supply wire for power supply to the processing unit and the storage unit; a signal wire for signal transmission between the processing unit and the storage unit; a disconnection unit that is capable of disconnecting a portion, which performs power supply to the storage unit, in the power supply wire and disconnecting the signal wire; and a connection unit that is capable of connecting a portion of the power supply wire on a side of the storage unit relative to the disconnection unit and a portion of the signal wire on the side of the storage unit relative to the disconnection unit with an outside, and in which the storage unit of the board subject to replacement is connected to the processing unit of the board as a replacement via the connection unit of the board subject to replacement in a state where the portion, which performs power supply to the storage unit, in the power supply wire and the signal wire are disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

Alternatively, a circuit board replacement system according to the present embodiment is a circuit board replacement system being a system for replacing a circuit board for controlling an apparatus, in which the board includes: a processing unit configured to be capable of executing various processes; a storage unit configured to be capable of storing various kinds of data; a power supply wire for power supply to the processing unit and the storage unit; a disconnection unit that is capable of disconnecting a portion, which performs power supply to the storage unit, in the power supply wire; and a connection unit that is capable of connecting a portion of the power supply wire on a side of the storage unit relative to the disconnection unit with an outside, and in which the storage unit of the board subject to replacement is connected to the processing unit of the board as a replacement via the connection unit of the board subject to replacement in a state where the portion, which performs power supply to the storage unit, in the power supply wire is disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

Alternatively, a circuit board replacement system according to the present embodiment is a circuit board replacement system being a system for replacing a circuit board for controlling an apparatus, in which the board includes: a processing unit configured to be capable of executing various processes; a storage unit configured to be capable of storing various kinds of data; a signal wire for signal transmission between the processing unit and the storage unit; a disconnection unit that is capable of disconnecting the signal wire; and a connection unit that is capable of connecting a portion of the signal wire on a side of the storage unit relative to the disconnection unit with an outside, and in which the storage unit of the board subject to replacement is connected to the processing unit of the board as a replacement via the connection unit of the board subject to replacement in a state where the signal wire is disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

A circuit board replacement method according to the present embodiment is a circuit board replacement method being a method for replacing a circuit board for controlling an apparatus, in which the board includes: a processing unit configured to be capable of executing various processes; a storage unit configured to be capable of storing various kinds of data; a power supply wire for power supply to the processing unit and the storage unit; a signal wire for signal transmission between the processing unit and the storage unit; a disconnection unit that is capable of disconnecting a portion, which performs power supply to the storage unit, in the power supply wire and disconnecting the signal wire; and a connection unit that is capable of connecting a portion of the power supply wire on a side of the storage unit relative to the disconnection unit and a portion of the signal wire on the side of the storage unit relative to the disconnection unit with an outside, and in which the storage unit of the board subject to replacement is connected to the processing unit of the board as a replacement via the connection unit of the board subject to replacement in a state where the portion, which performs power supply to the storage unit, in the power supply wire and the signal wire are disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

Alternatively, a circuit board replacement method according to the present embodiment is a circuit board replacement method being a method for replacing a circuit board for controlling an apparatus, in which the board includes: a processing unit configured to be capable of executing various processes; a storage unit configured to be capable of storing various kinds of data; a power supply wire for power supply to the processing unit and the storage unit; a disconnection unit that is capable of disconnecting a portion, which performs power supply to the storage unit, in the power supply wire; and a connection unit that is capable of connecting a portion of the power supply wire on a side of the storage unit relative to the disconnection unit with an outside, and in which the storage unit of the board subject to replacement is connected to the processing unit of the board as a replacement via the connection unit of the board subject to replacement in a state where the portion, which performs power supply to the storage unit, in the power supply wire is disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

Alternatively, a circuit board replacement method according to the present embodiment is a circuit board replacement method being a method for replacing a circuit board for controlling an apparatus, in which the board includes: a processing unit configured to be capable of executing various processes; a storage unit configured to be capable of storing various kinds of data; a signal wire for signal transmission between the processing unit and the storage unit; a disconnection unit that is capable of disconnecting the signal wire; and a connection unit that is capable of connecting a portion of the signal wire on a side of the storage unit relative to the disconnection unit with an outside, and in which the storage unit of the board subject to replacement is connected to the processing unit of the board as a replacement via the connection unit of the board subject to replacement in a state where the signal wire is disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

### Brief Description of Drawings

[Figure 1] Figure 1 is a diagram schematically illustrating a configuration example of an air conditioner according to a first embodiment.
[Figure 2] Figure 2 is a diagram schematically illustrating a configuration example of a circuit board according to the first embodiment.
[Figure 3] Figure 3 is a diagram schematically illustrating a specific configuration example of a coupling wire portion in the circuit board according to the first embodiment.
[Figure 4] Figure 4 is a diagram schematically illustrating an example of a state where a circuit board replacement system according to the first embodiment is constructed.
[Figure 5] Figure 5 is a flowchart schematically illustrating one example of a circuit board replacement method according to the first embodiment.
[Figure 6] Figure 6 is a flowchart schematically illustrating one example of a circuit board replacement method according to a second embodiment.
[Figure 7] Figure 7 is a diagram schematically illustrating a configuration example of a circuit board according to a third embodiment.
[Figure 8] Figure 8 is a diagram schematically illustrating an example of a state where a circuit board replacement system according to the third embodiment is constructed.
[Figure 9] Figure 9 is a diagram schematically illustrating a configuration example of a circuit board according to a fourth embodiment.
[Figure 10] Figure 10 is a diagram schematically illustrating an example of a state where a circuit board replacement system according to the fourth embodiment is constructed.

### Description of Embodiments

A plurality of embodiments, each of which raises, as an example, a circuit board installed in an air conditioner as a circuit board for controlling an apparatus, will hereinafter be described with reference to the drawings. In addition, a plurality of embodiments, which are related to circuit board replacement systems and circuit board replacement methods for replacing the circuit boards, will be described with reference to the drawings. In the plurality of embodiments, the same reference characters will be given to substantially the same elements, and descriptions thereof will not be made.

### (First Embodiment)

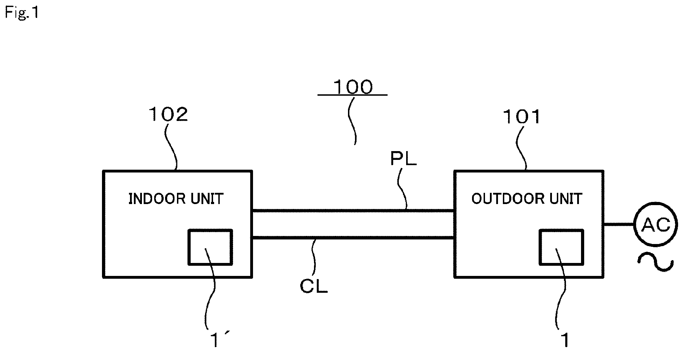

As illustrated as an example in Figure 1, a circuit board 1 according to the present disclosure is installed in an outdoor unit 101 which constitutes an air conditioner 100, for example. In the following, the circuit board 1 might simply be referred to as the board 1. The board 1 is a control circuit board which controls general action of the outdoor unit 101 and further of the whole air conditioner 100. The outdoor unit 101 and an indoor unit 102 together constitute the air conditioner 100. The outdoor unit 101 is connected to a commercial alternating-current power source AC and is supplied with power necessary for an operation from the commercial alternating-current power source AC. In the following, the commercial alternating-current power source AC will also be referred to as an alternating-current power source AC. The indoor unit 102 is similarly connected to the alternating-current power source AC via a power source line PL from the outdoor unit 101. Note that in the indoor unit 102 also, a control circuit board 1' is installed which acts in association with the circuit board 1 of the outdoor unit 101. The circuit board 1 of the outdoor unit 101 is joined to the control circuit board 1' of the indoor unit 102 through a communication line CL and controls the action of the whole air conditioner 100 while mutually exchanging information.

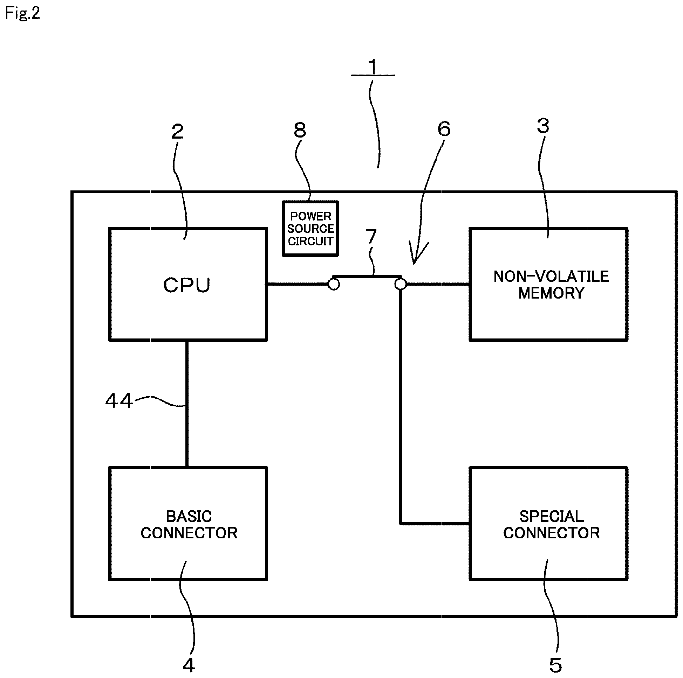

As illustrated as an example in Figure 2, the board 1 includes a CPU 2 (central processing unit), a non-volatile memory 3, a basic connector 4, a special connector 5, a coupling wire portion 6, and a power source circuit 8. Each component on the circuit board 1 is fixed by soldering or the like onto a printed board, for example, so as to be electrically connected. The CPU 2 is combined with a ROM, a RAM, their peripheral circuits, and so forth, which are not illustrated, and thereby constitutes a processing unit. The CPU 2 is configured to be capable of executing various processes related to actions and so forth of the outdoor unit 101 and the indoor unit 102 based on control programs, various kinds of setting data, and so forth which are stored in the ROM. The CPU 2 is capable of executing a data transfer process, which will later be described in detail.

The non-volatile memory 3 is one example of a storage unit formed with a semiconductor and is configured to be capable of storing various kinds of data. Note that control programs and a part of control data for executing a usual operation process are stored in the ROM connected to the CPU 2. In the non-volatile memory 3, setting information about various functions of the outdoor unit 101 and the air conditioner 100 is stored. Here, as for stored information, not only default information at shipment of the outdoor unit 101 but also setting contents, which are added and changed in accordance with an installation state or a demand of a user by an installation contractor or a service person after installation of the air conditioning device 100, are stored.

The basic connector 4 is configured to be connectable to an outside. The basic connector 4 is a standard connector which includes six terminals soldered to the above kind of board 1 in order to perform data input and so forth from the outside of the board 1, for example. The special connector 5 is a standard six-terminal connector which is soldered to the board 1 similarly to the basic connector 4 and is configured to be connectable to the outside. The special connector 5 is one example of a connection unit and is a connector which is provided specially and separately from the basic connector 4 in order to realize a board replacement method according to the present disclosure. As for the basic connector 4 and the special connector 5, it is desirable to use the same product to reduce kinds of components.

The coupling wire portion 6 electrically couples or connects the non-volatile memory 3 and the special connector 5 with the CPU 2. A disconnection unit 7 is provided in a halfway portion of the coupling wire portion **6.** The non-volatile memory 3 and the special connector 5 are connected to the CPU 2 by a plurality of coupling wires which constitute the coupling wire portion **6.** On the other hand, the basic connector 4 is connected to the CPU 2 by a coupling wire group 44, no coupling wire of which is electrically connected to the coupling wires constituting the coupling wire portion **6.** Here, a part except the disconnection unit 7 in the coupling wires constituting the coupling wire portion 6 is configured mainly with a conductive wire pattern on the circuit board 1, and depending on cases, a lead wire may be used for a part of the above part.

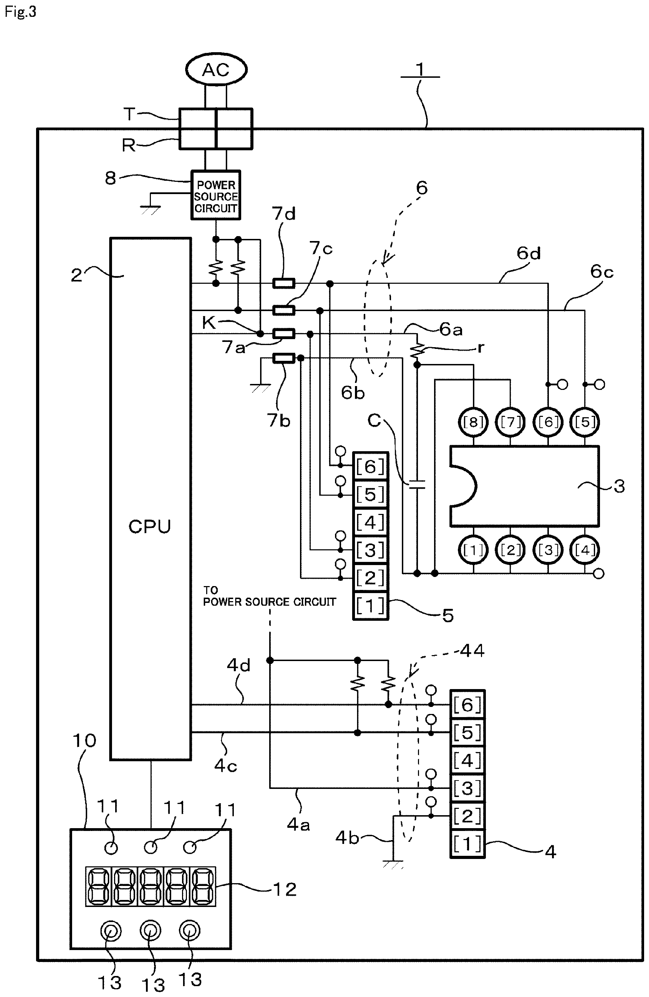

A conceptual circuit block in Figure 2 is described until here, but the board 1 which embodies a circuit configuration will be illustrated in Figure 3 as an example. The power source circuit 8 is connected to the alternating-current power source AC via power source terminals R such as two receptacle terminals and two tab terminals T joined to the alternating-current power source AC, the power source terminals R and the tab terminals T being provided on the board 1. The power source circuit 8 is a circuit that is formed with various electric and electronic elements, which are soldered to a circuit pattern on the board 1 and are mutually connected, receives an alternating-current voltage from the alternating-current power source AC as an input, and converts the input to an output such as a direct-current voltage, which is obtained by stepping down the alternating-current voltage, for example, five volts (V) DC. As the power source circuit 8, a common AC-DC conversion circuit such as a combination of a rectification circuit and a switching regulator or a series regulator can be used. All of the components on the board 1 such as the CPU 2 and the non-volatile memory 3 act by using a direct-current output of the power source circuit 8 as a power source.

The coupling wire portion 6 is configured with a plurality, in this case, four coupling wires. In this case, the coupling wire portion 6 has one power supply wire 6a, one reference potential wire 6b, and two signal wires 6c and 6d. The power supply wire 6a is wiring for power supply from the power source circuit 8 to various components on the board 1, particularly, to the CPU 2 and the non-volatile memory 3. The reference potential wire 6b is a coupling wire which provides a reference potential of the circuit board 1, for example, zero volt (V). The signal wires 6c and 6d are coupling wires for transmitting data and signals. A direct-current voltage from the power source circuit 8, for example, 5 V DC is applied between the power supply wire 6a and the reference potential wire 6b.

The non-volatile memory 3 includes eight terminals of ports [1] to [8]. Two input-output ports [5] and [6] among those are respectively connected to the signal wires 6c and 6d, the ports [1] to [4] and [7] are joined to the reference potential wire 6b, and the port [8] is joined to the power supply wire 6a. Consequently, the non-volatile memory 3 is connected to other circuits on the board 1 only through the power supply wire 6a, the reference potential wire 6b, and the signal wires 6c and 6d which constitute the coupling wire portion 6 but, other than the coupling wire portion 6, is not connected to circuits on the board 1 except a register r, which is provided on the board 1 in a halfway portion of the power supply wire 6a for stabilization of a power source voltage, and a capacitor C, which is connected between the power supply wire 6a and the reference potential wire 6b, as simple elements, that is, elements with a low possibility of individual failure.

The non-volatile memory 3 acts with a voltage applied between the ports [7] and [8] as power source ports. Conversely, in a case where no voltage is applied between the power source ports [7] and [8], the non-volatile memory 3 does not act. However, because the non-volatile memory 3 is a non-volatile memory, data saved in its action is not erased even when the power source voltage is thereafter cut off and is maintained in a saved state. Consequently, when the power source is again turned on, it is possible to read data which are saved in the non-volatile memory 3 before the power source is shut off. Furthermore, the non-volatile memory 3 exchanges electric signals with external apparatuses via its input-output ports [5] and [6] and can thereby save input data and provide data saved in its internal portion to the outside. In control, the CPU 2 writes information which has to be saved and reads data saved in the non-volatile memory 3 via the input-output ports [5] and [6] of the non-volatile memory 3.

The disconnection unit 7 is configured with a plurality, in this case, four jumper wires 7a to 7d in accordance with the number of coupling wires which constitute the coupling wire portion 6. Each of the jumper wires 7a to 7d is wiring that connects together two circuit patterns, which are not connected on the board 1, through a space above the board 1. Each of the jumper wires 7a to 7d is a thin metal wire which is not covered, is in an exposed state, and is electrically continuous. The jumper wire 7a is provided in a halfway portion of the power supply wire 6a, in this case, a portion of the power supply wire 6a, which performs power supply to the non-volatile memory 3. Note that the power supply wire 6a supplies power to the CPU 2 by wiring which branches at a branching portion on the power source circuit 8 side relative to the jumper wire 7a, in other words, which branches the branching portion indicated by a point K in Figure 3. The jumper wire 7b is provided in a halfway portion of the reference potential wire 6b. The jumper wire 7c is provided in a halfway portion of the signal wire 6c. The jumper wire 7d is provided in a halfway portion of the signal wire 6d. As described later, in order to avoid an influence on other circuits in the board 1 in failure, it is desirable that the jumper wires 7a to 7d be respectively provided in parts in the coupling wires 6a to 6d, which are as close as possible to the non-volatile memory 3. When all of the jumper wires 7a to 7d are disconnected, all of the eight terminals of the non-volatile memory 3, that is, the ports [1] to [8] are separated from the CPU 2 and the power source circuit 8 as active element and circuit on the board 1, and an influence from those circuits on the board 1 on the non-volatile memory 3 is eliminated.

In the special connector 5, four terminals among six terminals including pins [1] to [6] are used and are connected to the coupling wire portion 6 which branches on the non-volatile memory 3 side with respect to the jumper wires 7a to 7d in the coupling wire portion **6.** That is, the coupling wire portion 6 branches into two sets in distal portions from the jumper wires 7 relative to the CPU 2 side, in other words, on the non-volatile memory 3 side relative to the jumper wires 7, one of the sets is joined to the non-volatile memory 3, and the other set is joined to the special connector 5. For example, connection wiring from the above branching portions to the special connector 5 is formed with a conduction pattern provided on the board 1. The pins [1] and [4] of the special connector 5 are not used, the pin [2] is joined to the reference potential wire 6b, the pin [3] is joined to the power supply wire 6a, and the pins [5] and [6] are respectively connected to the signal wires 6c and 6d.

The coupling wire group 44 includes four independent pieces of wiring. The pieces of wiring are formed with one power supply wire 4a, one reference potential wire 4b, and two signal wires 4c and 4d. Similarly to the power supply wire 6a, the power supply wire 4a is joined to the point K as a direct-current output end of the power source circuit 8. The reference potential wire 4b is joined to a reference potential section of the board 1 in the same manner as the reference potential wire 6b. The two signal wires 4c and 4d are joined to input-output terminals of the CPU 2. As needed, the CPU 2 is capable of transmitting and receiving electric signals which are capable of reading, writing, and erasing data with respect to the non-volatile memory 3 via the two signal wires 4c and 4d.

In the same manner as the special connector 5, in the basic connector 4, four terminals among six terminals with pins [1] to [6] are used, and the pins [1] and [4] are not used. The pin [2] of the basic connector 4 is joined to the reference potential wire 4b, the pin [3] is joined to the power supply wire 4a, and the pins [5] and [6] are respectively connected to the signal wires 4c and 4d which extend from the CPU 2.

The board 1 includes a switch unit 10 which functions as a manipulation unit and a display unit. The switch unit 10 includes tact switches 11, a display apparatus 12, and rotary switches 13, for example. A plurality, in this case, three tact switches 11 are provided, and an ON state and an OFF state are switched in accordance with a pressing manipulation by a worker. In this case, the display apparatus 12 is configured with five seven-segment light emitting diodes. A plurality, in this case, three rotary switches 13 are provided, and an input value can be adjusted in accordance with a rotation manipulation by the worker. The input value which is adjusted by the rotation manipulation of the rotary switches 13 is displayed on the display apparatus 12.

The board 1 configured as described above is installed in the air conditioner 100 and might be replaced in maintenance, in an inspection, or in an occurrence of some defect. A situation which most frequently occurs is failure of the board 1. Large numbers of electric components and electronic components are installed in the board 1, an original normal action cannot be performed when only one of those is in failure, and replacement of the board 1 becomes necessary. Next, a description will be made in detail about one example of a replacement method for the board 1 in such a case. In the present disclosure, both of the board 1 subject to replacement, which is already installed in the air conditioner 100, and the board 1 as a replacement, which is newly installed in the air conditioner 100, have the above-described configuration of the board 1. In other words, the board 1 subject to replacement and the board 1 as the replacement have the same circuit configuration. Note that in the following description about replacement of the board 1, the same can apply to a case where when the outdoor unit 101 itself is replaced, that is, when the original outdoor unit 101 is detached and is substituted by a new outdoor unit 101, data of the board of the original outdoor unit 101 are transferred to the board of the new outdoor unit 101.

In the following, for convenience of description, the board 1 subject to replacement, in other words, the old board 1 might be referred to as a board 1A, and the board 1 as the replacement, in other words, the new board 1 might be referred to as a board 1B. Further, the CPU 2, the non-volatile memory 3, the basic connector 4, the special connector 5, the coupling wire portion 6, the disconnection unit 7, and the switch unit 10, which are included in the board 1A subject to replacement, might respectively be referred to as a CPU 2A, a non-volatile memory 3A, a basic connector 4A, a special connector 5A, a coupling wire portion 6A, a disconnection unit 7A, a switch unit 10A, and the CPU 2, the non-volatile memory 3, the basic connector 4, the special connector 5, the coupling wire portion 6, the disconnection unit 7, and the switch unit 10, which are included in the board 1B as the replacement, might respectively be referred to as a CPU 2B, a non-volatile memory 3B, a basic connector 4B, a special connector 5B, a coupling wire portion 6B, a disconnection unit 7B, and a switch unit 10B.

If some defect occurs to the board 1, the worker detaches the old board 1 in which the setting data and so forth are saved, in other words, the board 1 to which the defect occurs from the outdoor unit 101 and removes wiring of the alternating-current power source AC from the power source terminals R. Then, the worker attaches the new board 1, in which the setting data and so forth are not saved in the non-volatile memory 3, as the new board 1 to a predetermined position of the outdoor unit 101 and connects the wiring of the alternating-current power source AC with the power source terminals R. Next, the worker disconnects the disconnection unit 7 of the old board 1.

A disconnection manipulation of the disconnection unit 7 is performed by a manipulation from the outside in which all of the jumper wires 7a to 7d or predetermined jumper wires on the board 1 are disconnected by a tool such as diagonal pliers, for example. In this case, the worker may disconnect all of the jumper wires 7a to 7d, may disconnect only the jumper wire 7a among the jumper wires 7a to 7d, or may disconnect only the jumper wires 7c and 7d among the jumper wires 7a to 7d. However, when only the jumper wire 7a among the jumper wires 7a to 7d is disconnected, potentials to ground of the components on the board 1 which are joined to the power supply wire 6a become unstable. Thus, in a case where the jumper wire 7a is disconnected, it is desirable to disconnect the jumper wire 7b together at the same time. Note that order of work for disconnecting the disconnection unit 7 of the old board 1 and work for attaching the new board 1 to a predetermined position of the outdoor unit 101 does not matter.

All of the jumper wires 7a to 7d are disconnected from the outside, and the disconnection unit 7 thereby forms a state where the power supply wire 6a, the reference potential wire 6b, and the signal wires 6c and 6d are disconnected. Alternatively, only the jumper wire 7a or the jumper wires 7a and 7b are disconnected from the outside, and the disconnection unit 7 thereby forms a state where only a portion, which performs power supply to the non-volatile memory 3, in the power supply wire 6a is disconnected. Alternatively, only the jumper wires 7c and 7d are disconnected from the outside, and the disconnection unit 7 thereby forms a state where only the signal wires 6c and 6d joined to the CPU 2A are disconnected.

The above three kinds of selective disconnection states of the jumper wires 7a to 7d in the disconnection unit 7, that is,
(1) the state where all of the power supply wire 6a, the reference potential wire 6b, and the signal wires 6c and 6d are disconnected,
(2) the state where only the power supply wire 6a or both of the power supply wire 6a and the reference potential wire 6b are disconnected, and
(3) the state where only the signal wires 6c and 6d are disconnected
are all included in a concept of "a state where the disconnection unit 7 is disconnected".

In the following, in the drawings, the disconnection unit 7 in "a non-disconnected state" is indicated by solid lines, and the disconnection unit 7 in "a disconnected state" is indicated by spaces.

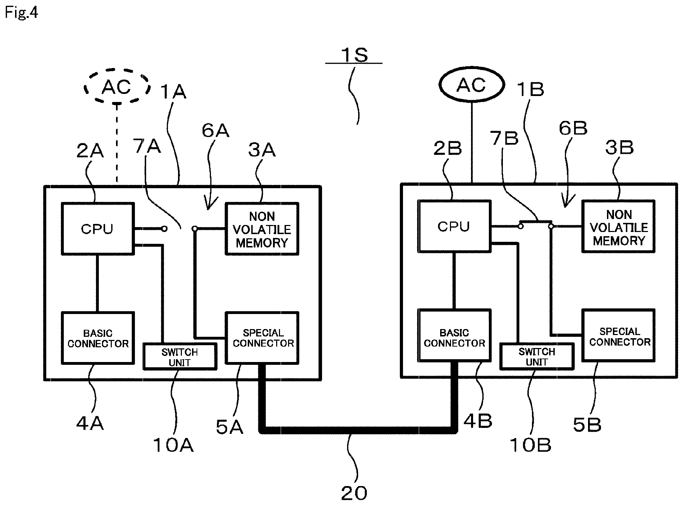

As illustrated as an example in Figure 4, the worker disconnects the disconnection unit 7A in the board 1A subject to replacement. In this case, the worker does not disconnect the disconnection unit 7B in the board 1B as the replacement. Then, in a state where the disconnection unit 7A of the board 1A subject to replacement is disconnected, the worker connects the non-volatile memory 3A of the board 1A with the CPU 2B of the board 1B as the replacement via the special connector 5A of the board 1A subject to replacement and the basic connector 4B of the board 1B as the replacement. Accordingly, a circuit board replacement system 1S is constructed in which the board 1A subject to replacement and the board 1B as the replacement are connected together to be capable of data transfer. In this case, for connection between the special connector 5A of the board 1A and the basic connector 4B of the board 1B, for example, transition wiring of a wired cable such as a harness 20 can be used.

In connection between the special connector 5A of the board 1A subject to replacement and the basic connector 4B of the board 1B as the replacement, both of the connectors are connected such that their pin numbers agree with each other. That is, for example, the pin [2] of the special connector 5A of the board 1A is connected to the pin [2] of the basic connector 4B of the board 1B as the replacement in a wired manner by the transition wiring.

In this circuit board replacement system 1S, direct power supply from the alternating-current power source AC is performed to the board 1B as the replacement but is not performed to the board 1A subject to replacement. Thus, power supply to the non-volatile memory 3A of the board 1A subject to replacement is indirectly performed from the board 1B as the replacement to which power from the alternating-current power source AC is supplied via the pins [2] and [3] of the basic connector 4B of the board 1B, which are connected to the pins [2] and [3] of the special connector 5A of the board 1A. That is, when the board 1B as the replacement is connected to the alternating-current power source AC, a direct-current output from a power source circuit 8B of the board 1B is joined to the pin [3] of the special connector 5A of the board 1A subject to replacement via the pin [3] of the basic connector 4B and thereafter flows to the power supply wire 6a of the board 1A, and power is supplied to the non-volatile memory 3A.

Similarly, because the pin [2] of the basic connector 4B of the board 1B is electrically connected to the pin [2] of the special connector 5A of the board 1A subject to replacement, reference potentials of both of the board 1B and the board 1A become the same level. As a result, the non-volatile memory 3A of the board 1A subject to replacement becomes capable of normally acting.

Then, in the above connection state, the worker performs a predetermined manipulation for the switch unit 10B included in the board 1B as the replacement. The predetermined manipulation can be a manipulation, in which a board replacement mode is selected by performing the rotation manipulation of the rotary switches 13 and the tact switches 11 are pressed in a state where a code number for the board replacement mode is displayed on the display apparatus 12, or the like, for example.

Then, when such a predetermined manipulation is performed for the switch unit 10B, the CPU 2B of the board 1B as the replacement starts the data transfer process. The data transfer process is a process in which data stored in the non-volatile memory 3A of the board 1A subject to replacement are read by the CPU 2B of the board 1B as the replacement via the special connector 5A of the board 1A and the basic connector 4B of the board 1B and are thereby stored in the non-volatile memory 3B of the board 1B as the replacement, a so-called copy process.

Describing a flow path of the data in this case, that is, electric signals, the CPU 2B transmits and receives signals via the two signal wires 4c and 4d of the board 1B. The signals flowing through the signal wires 4c and 4d of the board 1B pass via the pins [5] and [6] of the basic connector 4B of the board 1B and the pins [5] and [6] of the special connector 5A which are connected to the above pins, reach the signal wires 6c and 6d of the board 1A, and are joined to the non-volatile memory 3A. Thus, the CPU 2B can take up all data and information, which are saved in the non-volatile memory 3A, via the basic connector 4B and the special connector 5A. Then, the CPU 2B saves the data and information, which are taken up from the board 1A, in the non-volatile memory 3B of the own board 1B of the CPU 2B through the coupling wire portion 6B.

In such a data transfer process, various kinds of data stored in the non-volatile memory 3A of the board 1A subject to replacement can be replicated in the non-volatile memory 3B of the board 1B as the replacement while those various kinds of data are left in the board 1A. Note that other than data about apparatus settings, for example, a variety of data such as failure history data can be saved in the non-volatile memory 3A. It is often not necessary to replicate such failure history data in the new board 1B. Thus, in copying the data, the CPU 2B sorts out and selects necessary data and may thereby replicate only necessary data from the non-volatile memory 3A to the non-volatile memory 3B.

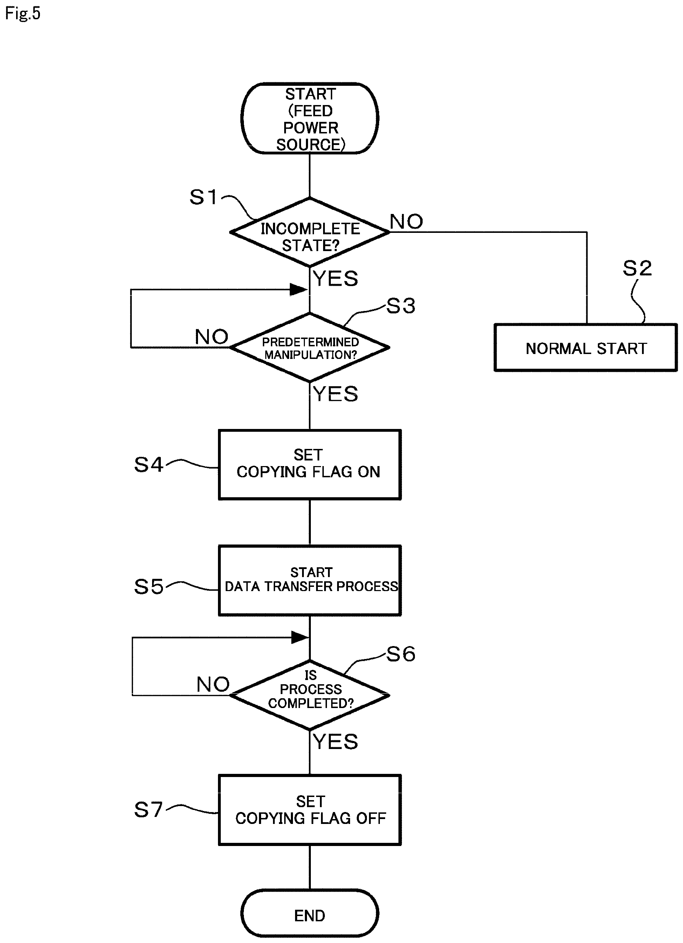

Next, a description will be made in detail about one example of a control flow based on the replacement system 1S of the board 1 and the replacement method for the board 1, which are described above. As illustrated as an example in Figure 5, when the power source is fed to the board 1B, the CPU 2B of the board 1B as the replacement checks whether or not a present state is a data transfer incomplete state where data transfer from the non-volatile memory 3A of the board 1A subject to replacement to the non-volatile memory 3B of the board 1B as the replacement is not completed (S1). That is, the CPU 2B checks whether or not the present state is a data deficient state where necessary data are not stored in the non-volatile memory 3B of the board 1B and whether or not a copying flag, which will later be described in detail, is in an ON state. Note that whether or not the present state is the data deficient state can be determined based on a check about whether or not data are stored in a plurality of predetermined data items, for example. Here, a case where the copying flag is in the ON state means that the copy process of data from the non-volatile memory 3A to the non-volatile memory 3B is in progress, and a case where the copying flag is in an OFF state means that the copy process of data from the non-volatile memory 3A to the non-volatile memory 3B is not in progress.

In a case where the present state is not the data deficient state and a case where the copying flag is in the OFF state, the CPU 2B determines that the present state is not the data transfer incomplete state (NO in S1). Then, the CPU 2B performs a normal start (S2) and controls the action of the air conditioner 100, in this case, mainly the action of the outdoor unit 101 based on the control programs, various kinds of data stored in the non-volatile memory 3B, and so forth.

In a case where the present state is the data deficient state or a case where the copying flag is in the ON state, the CPU 2B determines that the present state is the data transfer incomplete state (YES in S1). Then, the CPU 2B stands by until the predetermined manipulation is performed in the switch unit 10B (NO in S3). Then, when the predetermined manipulation is performed in the switch unit 10B (YES in S3), the CPU 2B switches the copying flag to the ON state (S4).

Then, the CPU 2B starts the data transfer process (S5) and repeats reading of data from the non-volatile memory 3A of the board 1A, writing of data into the non-volatile memory 3B of the board 1B, and a verification of the data written into the non-volatile memory 3B. Then, when the writing into the non-volatile memory 3B of the board 1B and the verification are completed for all of the data stored in the non-volatile memory 3A of the board 1A (YES in S6), the CPU 2B switches the copying flag to the OFF state (S7) and finishes this control flow. Then, after this control flow is finished, it is desirable that the worker stop power source feeding to the board 1B.

If a control flow is assumed which moves to the normal start (S2) following completion of the data transfer process (YES in S6), because there is a possibility that the air conditioner 100 is actuated in a state where the board 1A and the board 1B are connected together by the harness 20 or the like or a possibility that the air conditioner 100 is actuated in a state where safety about power source supply or the like is not secured, for example, this is not preferable. Thus, in a case where the above-described control flow is finished, in other words, a case where the data transfer process is completed, it is desirable that the worker once stop power source feeding to the board 1B. Accordingly, unless power source feeding is newly performed to the board 1B, a situation can be avoided where the board 1B unintentionally performs the normal start.

When the power source is again fed to the board 1B after power source feeding is stopped, the CPU 2B checks whether or not the present state is the data transfer incomplete state (S1). In this case, because necessary data are stored in the non-volatile memory 3B of the board 1B and the copying flag is in the OFF state, the CPU 2B determines that the present state is not the data transfer incomplete state in step S1 (NO in S1), moves to step S2, and starts the normal start.

In the embodiment raised as an example in the above, the board 1 installed in the air conditioner 100 includes the CPU 2 configured to be capable of executing various processes, the non-volatile memory 3 configured to be capable of storing various kinds of data, the special connector 5 configured to be connectable to the outside, the coupling wire portion 6 which couples the non-volatile memory 3 and the special connector 5 with the CPU 2, and the disconnection unit 7 in which a portion of the coupling wire portion 6 is disconnected, the portion coupling the CPU 2 with the non-volatile memory 3, the CPU 2 is thereby separated from the non-volatile memory 3, and a replacing form in which only the special connector 5 is coupled with the non-volatile memory 3 is thereby formed.

In the disconnection unit 7, only the jumper wire 7a among the plurality of jumper wires 7a to 7d is disconnected, and the portion, which performs power supply to the non-volatile memory 3, in the power supply wire 6a can thereby be disconnected. Alternatively, in the disconnection unit 7, only the jumper wires 7c and 7d among the plurality of jumper wires 7a to 7d are disconnected, and only the signal wires 6c and 6d can thereby be disconnected.

In the board 1 configured in such a manner, the non-volatile memory 3A of the board 1A subject to replacement is connected to the CPU 2B of the board 1B as the replacement via the special connector 5A, wiring such as the harness 20, and the basic connector 4B in a state where the plurality of jumper wires 7a to 7d of the disconnection unit 7A are appropriately selected and disconnected in the board 1A subject to replacement, the data stored in the non-volatile memory 3A of the board 1A subject to replacement are read by the CPU 2B of the board 1B as the replacement via the special connector 5A of the board 1A subject to replacement in the above connection state, and the data transfer process for storing the data in the non-volatile memory 3B of the board 1B as the replacement can thereby be executed.

In this configuration example, the board 1A subject to replacement and the board 1B as the replacement are caused to have the same configuration, and transfer of data can safely and quickly be carried out between the old and new boards 1A and 1B in data transfer from the non-volatile memory 3A to the non-volatile memory 3B. Furthermore, the old and new boards 1A and 1B are caused to have the same configuration, and kinds of components can thereby be reduced. What is necessary in transferring data between the two boards 1A and 1B is only the transition wiring for connecting together the two connectors, and no special tool is necessary. Further, because the connector as an individual connector which has the same configuration is used as each of the special connector 5 and the basic connector 4, the wiring for connecting the two connectors together has no directivity of connection, and no connection mistake occurs. Further, data can also be left in the board 1A subject to replacement after the data are transferred to the board 1B as the replacement, and the saved data can be utilized in an investigation about a failure cause in the future or the like, for example.

The disconnection unit 7 is configured with the jumper wires which electrically connect together two or more patterns on the board 1. Thus, the disconnection unit 7 can inexpensively be realized. When the jumper wire is once disconnected, it is difficult or impossible to restore that to an original connection state. Thus, the disconnection unit 7 may be a DIP switch, for example. In the DIP switch, even if disconnection or separation is accidentally performed, the original connection state can easily be restored.

It is sufficient that the disconnection unit 7 has a configuration that is capable of disconnecting at least a portion, which performs power supply to the non-volatile memory 3, in the coupling wire portion 6 formed with the four coupling wires 6a to 6d, that is, only a portion of the power supply wire 6a on the non-volatile memory 3 side relative to the jumper wire 7a or disconnecting a portion of the power supply wire 6a on the non-volatile memory 3 side relative to the jumper wire 7a and the reference potential wire 6b. Accordingly, before data transfer, during the data transfer, and after the data transfer from the board 1A subject to replacement to the board 1B as the replacement in replacement work, a situation can be avoided where power is supplied from the board 1B as the replacement to the CPU 2A of the board 1A subject to replacement, and a situation can be prevented where the CPU 2A of the board 1A subject to replacement unintentionally act and this exerts an adverse influence on the data transfer. Note that even when the portion, which performs power supply to the non-volatile memory 3, in the power supply wire 6a in the board 1A subject to replacement is disconnected, power can be supplied from the board 1B as the replacement to the non-volatile memory 3A via the pin [6] of the terminal of the special connector 5A and the pin [6] of the terminal of the normal connector 4B.

Alternatively, the disconnection unit 7 may have a configuration that is capable of disconnecting at least the signal wires 6c and 6d in the coupling wire portion 6. In this configuration, even if power is supplied from the board 1B as the replacement to the CPU 2A of the board 1A subject to replacement, in the board 1A, a signal can be inhibited from being transmitted from the CPU 2A to the non-volatile memory 3A. Thus, without being obstructed by the CPU 1A of the board 1A subject to replacement, the CPU 2B of the board 1B as the replacement can exchange data with the non-volatile memory 3A of the board 1A subject to replacement.

Alternatively, the disconnection unit 7 may have a configuration which does not include the reference potential wire 6b. Accordingly, when power is supplied from the board 1B as the replacement to the board 1A subject to replacement, the board 1A can be maintained at the reference potential or a ground potential.

In general, there are a variety of failure causes due to which the board 1A has to be replaced. For example, various situations are possible such as where the CPU 1A does not act and where a circuit or wiring of the power source circuit 8A is broken or short-circuited due to a secular change. Thus, in order to most safely carry out transfer of data from the non-volatile memory 3A to the non-volatile memory 3B, in other words, duplication, it is desirable that circuits on the board 1A and patterns on the board 1A, in other words, electric paths be used as little as possible, and even if those are used, it is advisable that use of those be kept in a minimum necessary range.

From such a viewpoint, it is most desirable that as for the disconnection unit 7, all of the coupling wires included in the coupling wire portion 6, that is, the power supply wire 6a, the reference potential wire 6b, and the signal wires 6c and 6d be disconnected. Accordingly, all of the terminals provided in the non-volatile memory 3 are electrically separated from the power source circuit 8, the CPU 2, and their peripheral circuits. Consequently, even when failures occur in a variety of sections on the board 1A, influences of those failures can maximally be avoided, and the replacing form in which the non-volatile memory 3 is coupled with the special connector 5 can certainly be formed.

When the switch unit 10B included in the board 1B as the replacement is manipulated, the CPU 2B of the board 1B as the replacement starts the data transfer process, that is, reading of data from the non-volatile memory 3A and writing of the data into the non-volatile memory 3B. In this configuration example, the data transfer process can be started based on an intentional manipulation of the switch unit 10B by the worker, and the data transfer process can be hindered from being started against an intention of the worker.

### (Second Embodiment)

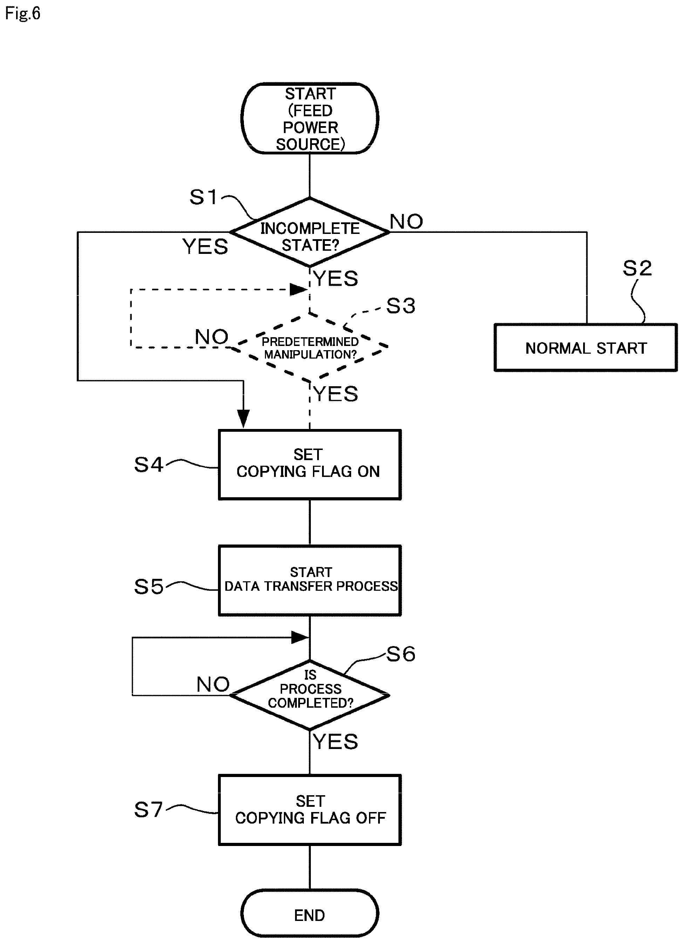

In the first embodiment, the start of the data transfer process is carried out by a manual manipulation by the worker, but there are cases where it is desired to omit manipulations by the worker and to quickly carry out the start. Accordingly, in a control flow illustrated as an example in Figure 6, in a case where the present state is a power source feeding state where the power source is fed to the board 1B and is the data transfer incomplete state where transfer of data from the non-volatile memory 3A of the board 1A subject to replacement to the non-volatile memory 3B of the board 1B as the replacement is not completed (YES in S1), when the non-volatile memory 3A of the board 1A subject to replacement is connected to the CPU 2B of the board 1B as the replacement via the special connector 5A of the board 1A subject to replacement in a state where the replacing form is formed by the disconnection unit 7A in the board 1A subject to replacement, in other words, when the circuit board replacement system 1S is constructed, the copying flag is switched to the ON state by the CPU 2B of the board 1B as the replacement regardless of whether or not the predetermined manipulation is performed in the switch unit 10B (S4), and the CPU 2B of the board 1B as the replacement thereafter starts the data transfer process (S5).

In this control example, the manipulation of the switch unit 10B by the worker is not necessary, and in response to the fact that a predetermined condition is satisfied, in this case, the fact that the circuit board replacement system 1S is constructed, the data transfer process can automatically be started. Accordingly, a work load on the worker which accompanies replacement of the board 1 can be reduced.

### (Third Embodiment)

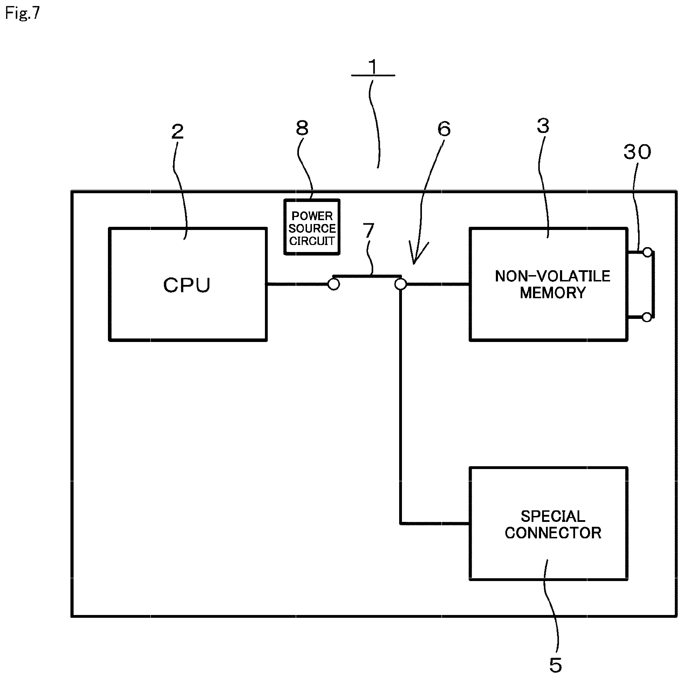

The board 1 illustrated as an example in Figure 7 does not include the basic connector 4. In the board 1, the non-volatile memory 3 includes an address switching switch 30. The address switching switch 30 is configured to be capable of switching the non-volatile memory 3 to an open state and a ground state by opening and closing a switch. The address switching switch 30 switches the non-volatile memory 3 to the open state and the ground state and can thereby switch addresses of the non-volatile memory 3.

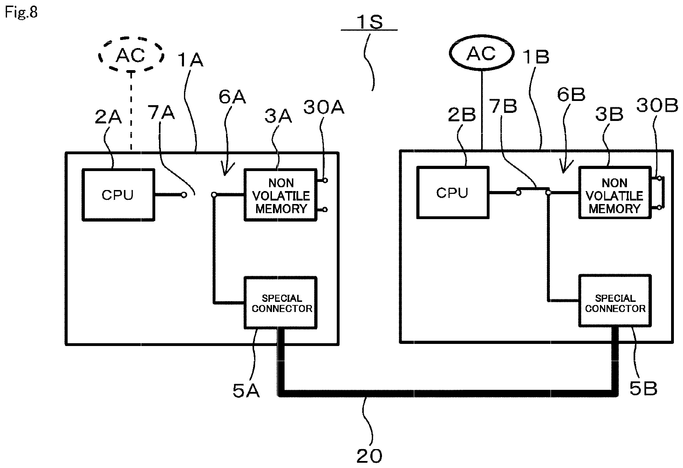

Figure 8 illustrates, as an example, a state where two boards 1A and 1B, each of which includes the address switching switch 30 in the non-volatile memory 3, are connected together and the circuit board replacement system 1S is thereby constructed. In this case, in the board 1A subject to replacement, the non-volatile memory 3A is switched to the open state by an address switching switch 30A, and the address of the non-volatile memory 3A is thereby switched to a predetermined first address. On the other hand, in the board 1B as the replacement, the non-volatile memory 3B is switched to the ground state by an address switching switch 30B, and the address of the non-volatile memory 3B is thereby switched to a predetermined second address.

In the circuit board replacement system 1S, two non-volatile memories 3A and 3B are connected to the CPU 2B of the board 1B as the replacement. The addresses of those two non-volatile memories 3A and 3B are respectively switched to different addresses by the address switching switches 30A and 30B. Thus, the CPU 2B of the board 1B can identify each of the two non-volatile memories 3A and 3B without being confused. Further, in this configuration example, the basic connector 4 is not necessary, and it is sufficient that only the special connector 5 is provided. Thus, the number of connectors mounted on the board 1 can be reduced, and simplification of the configuration of the board 1 can be intended.

### (Fourth Embodiment)

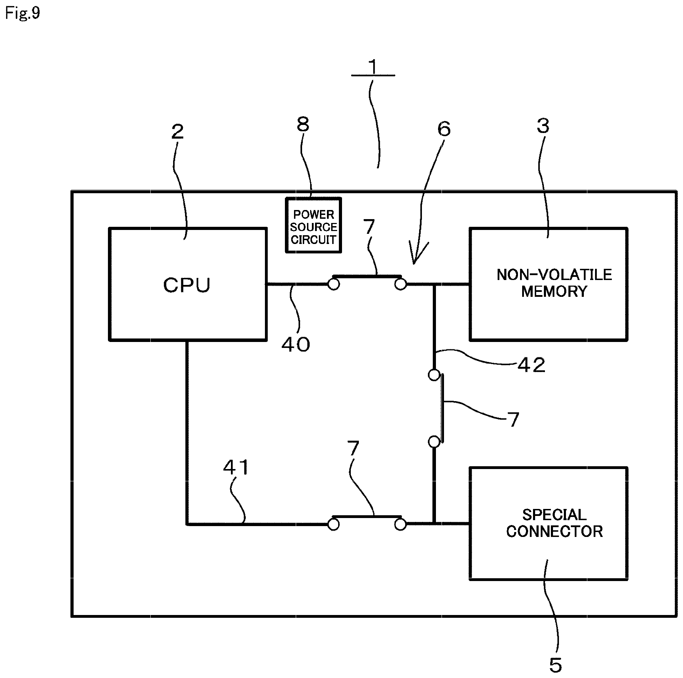

The board 1 illustrated as an example in Figure 9 does not include the basic connector 4. In the board 1, the coupling wire portion 6 includes a coupling line 40 which couples the CPU 2 with the non-volatile memory 3, a coupling line 41 which couples the CPU 2 with the special connector 5, and a coupling line 42 which couples the non-volatile memory 3 with the special connector 5. Each of the coupling lines 40, 41, and 42 includes coupling wires such as a power supply wire and a signal wire. In the board 1, each of the coupling lines 40, 41, and 42 includes the disconnection unit 7.

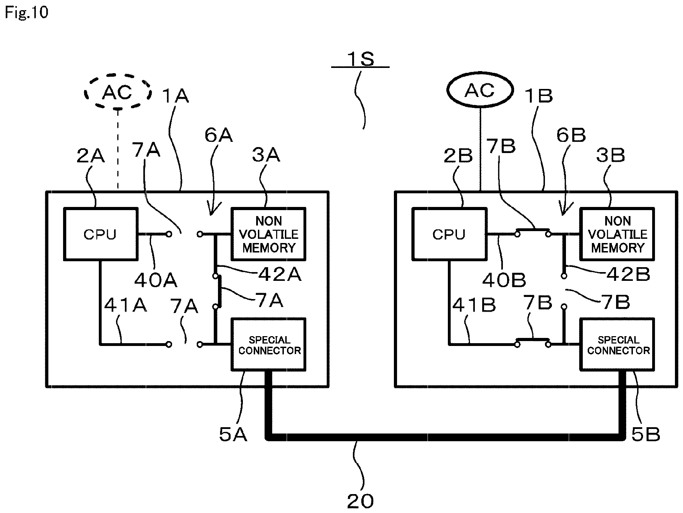

Figure 10 illustrates, as an example, a state where two boards 1A and 1B, in each of which each of the coupling lines 40, 41, and 42 includes the disconnection unit 7, are connected together and the circuit board replacement system 1S is thereby constructed. In this case, the board 1A subject to replacement is in a state where the coupling lines 40A and 41A are disconnected by the disconnection units 7A and the coupling line 42A is not disconnected by the disconnection unit 7A but is coupled. On the other hand, the board 1B as the replacement is in a state where the coupling line 42B is disconnected by the disconnection unit 7B and the coupling lines 40B and 41B are not disconnected by the disconnection units 7B but are each coupled.

In the circuit board replacement system 1S which is configured in such a manner, the CPU 2B of the board 1B as the replacement reads data stored in the non-volatile memory 3A of the board 1A subject to replacement via the special connector 5A of the board 1A and the special connector 5B of the board 1B and can thereby store the data in the non-volatile memory 3B of the board 1B as the replacement. Further, in this configuration example, the basic connector 4 can be made unnecessary. Accordingly, the number of connectors mounted on the board 1 can be reduced, and simplification of the configuration of the board 1 can be intended.

### (Other Embodiments)

The present disclosure is not limited to the plurality of above-described embodiments and can appropriately be modified and expanded without departing from the scope of the gist thereof. For example, the plurality of above-described embodiments can appropriately be carried out in combination. The board 1 may be a board which is installed in the indoor unit 102, for example, and may further be a board which is installed in another apparatus than the air conditioner. Although it is desirable that the board 1A subject to replacement and the board 1B as the replacement be the same product, it is sufficient as long as at least portions related to principal parts of the present disclosure have the same configurations, and portions which are not the principal parts of the present disclosure may have different configurations.

In the foregoing, the plurality of embodiments according to the present invention are described, those embodiments are presented only as examples and are not intended to limit the scope of the invention. Those novel embodiments can be carried out in a variety of other forms, and various kinds of omission, substitutions, changes, and modifications such as appropriate partial combinations and substitutions among a plurality of embodiments can be performed without departing from the scope of the gist of the invention. The present embodiments and their modifications are included in the scope of the gist of the invention and are included in the invention recited in the claims and the equivalent scope thereof.

### Reference Signs List

1 board (circuit board)
1S circuit board replacement system
2, 2A, 2B CPU (processing unit)
3, 3A, 3B non-volatile memory (storage unit)
4, 4A, 4B basic connector
5, 5A, 5B special connector (connection unit)
6, 6A, 6B coupling wire portion
6a power supply wire
6b reference potential wire
6c, 6d signal wire (non-power-supply wire)
7, 7A, 7B disconnection unit
10, 10A, 10B switch unit (manipulation unit)
100 air conditioner

## Claims

1. A circuit board for controlling an apparatus, the circuit board comprising:
a processing unit configured to be capable of executing various processes;
a storage unit configured to be capable of storing various kinds of data;
a power supply wire for power supply to the processing unit and the storage unit;
a signal wire for signal transmission between the processing unit and the storage unit;
a disconnection unit that is capable of disconnecting a portion, which performs power supply to the storage unit, in the power supply wire and disconnecting the signal wire; and
a connection unit that is capable of connecting a portion of the power supply wire on a side of the storage unit relative to the disconnection unit and a portion of the signal wire on the side of the storage unit relative to the disconnection unit with an outside.

2. A circuit board for controlling an apparatus, the circuit board comprising:
a processing unit configured to be capable of executing various processes;
a storage unit configured to be capable of storing various kinds of data;
a power supply wire for power supply to the processing unit and the storage unit;
a disconnection unit that is capable of disconnecting a portion, which performs power supply to the storage unit, in the power supply wire; and
a connection unit that is capable of connecting a portion of the power supply wire on a side of the storage unit relative to the disconnection unit with an outside.

3. A circuit board for controlling an apparatus, the circuit board comprising:
a processing unit configured to be capable of executing various processes;
a storage unit configured to be capable of storing various kinds of data;
a signal wire for signal transmission between the processing unit and the storage unit;
a disconnection unit that is capable of disconnecting the signal wire; and
a connection unit that is capable of connecting a portion of the signal wire on a side of the storage unit relative to the disconnection unit with an outside.

4. The circuit board according to any one of claims 1 to **3,** wherein
the disconnection unit is a jumper wire.

5. The circuit board according to claim **1,** wherein
the power supply wire has a portion which couples the processing unit and the connection unit together and a portion which couples the storage unit and the connection unit together and includes the disconnection unit in the portion which couples the processing unit and the connection unit together, and
the signal wire has a portion which couples the processing unit and the connection unit together and a portion which couples the storage unit and the connection unit together and includes the disconnection unit in the portion which couples the processing unit and the connection unit together.

6. The circuit board according to any one of claims 1 to 3, wherein
the storage unit is a non-volatile memory including a plurality of connection terminals and all of the connection terminals are capable of being disconnected by the disconnection unit.

7. The circuit board according to any one of claims 1 to 3, comprising
a connector, which is attached to the circuit board and is connectable to the outside, as the connection unit.

8. The circuit board according to any one of claims 1 to 3, comprising
a power source circuit to which an alternating-current power source is connected and which supplies power to the power supply wire.

9. A circuit board replacement system being a system for replacing a circuit board for controlling an apparatus,
wherein the board includes:
a processing unit configured to be capable of executing various processes;
a storage unit configured to be capable of storing various kinds of data;
a power supply wire for power supply to the processing unit and the storage unit;
a signal wire for signal transmission between the processing unit and the storage unit;
a disconnection unit that is capable of disconnecting a portion, which performs power supply to the storage unit, in the power supply wire and disconnecting the signal wire; and
a connection unit that is capable of connecting a portion of the power supply wire on a side of the storage unit relative to the disconnection unit and a portion of the signal wire on the side of the storage unit relative to the disconnection unit with an outside, and
wherein the storage unit of the board subject to replacement is connected to the processing unit of the board as a replacement via the connection unit of the board subject to replacement in a state where the portion, which performs power supply to the storage unit, in the power supply wire and the signal wire are disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

10. A circuit board replacement system being a system for replacing a circuit board for controlling an apparatus,
wherein the board includes:
a processing unit configured to be capable of executing various processes;
a storage unit configured to be capable of storing various kinds of data;
a power supply wire for power supply to the processing unit and the storage unit;
a disconnection unit that is capable of disconnecting a portion, which performs power supply to the storage unit, in the power supply wire; and
a connection unit that is capable of connecting a portion of the power supply wire on a side of the storage unit relative to the disconnection unit with an outside, and
wherein the storage unit of the board subject to replacement is connected to the processing unit of the board as a replacement via the connection unit of the board subject to replacement in a state where the portion, which performs power supply to the storage unit, in the power supply wire is disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

11. A circuit board replacement system being a system for replacing a circuit board for controlling an apparatus,
wherein the board includes:
a processing unit configured to be capable of executing various processes;
a storage unit configured to be capable of storing various kinds of data;
a signal wire for signal transmission between the processing unit and the storage unit;
a disconnection unit that is capable of disconnecting the signal wire; and
a connection unit that is capable of connecting a portion of the signal wire on a side of the storage unit relative to the disconnection unit with an outside, and
wherein the storage unit of the board subject to replacement is connected to the processing unit of the board as a replacement via the connection unit of the board subject to replacement in a state where the signal wire is disconnected by the disconnection unit in the board subject to replacement, and in the connection state, the processing unit of the board as the replacement reads data stored in the storage unit of the board subject to replacement via the connection unit of the board subject to replacement and executes a data transfer process for storing the data in the storage unit of the board as the replacement.

12. The circuit board replacement system according to any one of claims 9 to 11, wherein
the processing unit of the board as the replacement starts the data transfer process when a manipulation unit included in the board as the replacement is manipulated.

13. The circuit board replacement system according to any one of claims 9 to 11, wherein
in a case where a present state is a power source feeding state where a power source is fed to the board as the replacement and is a data transfer incomplete state where transfer of data from the storage unit of the board subject to replacement to the storage unit of the board as the replacement is not completed, when the storage unit of the board subject to replacement is connected to the processing unit of the board as the replacement via the connection unit of the board subject to replacement in a state where the disconnection unit is disconnected in the board subject to replacement, the processing unit of the board as the replacement starts the data transfer process.

14. The circuit board replacement system according to claim 9, wherein
the power supply wire has a portion which couples the processing unit and the connection unit together and a portion which couples the storage unit and the connection unit together and includes the disconnection unit in the portion which couples the processing unit and the connection unit together, and
the signal wire has a portion which couples the processing unit and the connection unit together and a portion which couples the storage unit and the connection unit together and includes the disconnection unit in the portion which couples the processing unit and the connection unit together.

15. A circuit board replacement method being a method for replacing a circuit board for controlling an apparatus,
wherein the board includes:
a processing unit configured to be capable of executing various processes;
a storage unit configured to be capable of storing various kinds of data;
a power supply wire for power supply to the processing unit and the storage unit;
a signal wire for signal transmission between the processing unit and the storage unit;
a disconnection unit that is capable of disconnecting a portion, which performs power supply to the storage unit, in the power supply wire and disconnecting the signal wire; and
a connection unit that is capable of connecting a portion of the power supply wire on a side of the storage unit relative to the disconnection unit and a portion of the signal wire on the side of the storage unit relative to the disconnection unit with an outside, and
wherein the storage unit of the board subject to replacement is connected to the processing unit of the board as a replacement via the connection unit of the board subject to replacement in a state where the portion, which performs power supply to the storage unit, in the power supply wire and the signal wire are disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

16. A circuit board replacement method being a method for replacing a circuit board for controlling an apparatus,
wherein the board includes:
a processing unit configured to be capable of executing various processes;
a storage unit configured to be capable of storing various kinds of data;
a power supply wire for power supply to the processing unit and the storage unit;
a disconnection unit that is capable of disconnecting a portion, which performs power supply to the storage unit, in the power supply wire; and
a connection unit that is capable of connecting a portion of the power supply wire on a side of the storage unit relative to the disconnection unit with an outside, and
wherein the storage unit of the board subject to replacement is connected to the processing unit of the board as a replacement via the connection unit of the board subject to replacement in a state where the portion, which performs power supply to the storage unit, in the power supply wire is disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

17. A circuit board replacement method being a method for replacing a circuit board for controlling an apparatus,
wherein the board includes:
a processing unit configured to be capable of executing various processes;
a storage unit configured to be capable of storing various kinds of data;
a signal wire for signal transmission between the processing unit and the storage unit;
a disconnection unit that is capable of disconnecting the signal wire; and
a connection unit that is capable of connecting a portion of the signal wire on a side of the storage unit relative to the disconnection unit with an outside, and
wherein the storage unit of the board subject to replacement is connected to the processing unit of the board as a replacement via the connection unit of the board subject to replacement in a state where the signal wire is disconnected by the disconnection unit in the board subject to replacement, and in the connection state, data stored in the storage unit of the board subject to replacement are read by the processing unit of the board as the replacement via the connection unit of the board subject to replacement, and a data transfer process for storing the data in the storage unit of the board as the replacement is executed.

18. The circuit board replacement method according to any one of claims 15 to 17, wherein
the data transfer process is started by the processing unit of the board as the replacement when a manipulation unit included in the board as the replacement is manipulated.

19. The circuit board replacement method according to any one of claims 15 to 17, wherein
in a case where a present state is a power source feeding state where a power source is fed to the board as the replacement and is a data transfer incomplete state where transfer of data from the storage unit of the board subject to replacement to the storage unit of the board as the replacement is not completed, when the storage unit of the board subject to replacement is connected to the processing unit of the board as the replacement via the connection unit of the board subject to replacement in a state where the disconnection unit is disconnected in the board subject to replacement, the data transfer process is started by the processing unit of the board as the replacement.
